# EUROPÄISCHE PATENTANMELDUNG

(11) **EP 2 236 878 A2**
(43) Veröffentlichungstag der Anmeldung: **06.10.2010**
(21) Anmeldenummer: 10155539.9
(22) Anmeldetag: 04.03.2010
(51) Int. Cl.: F16K 11/074

(54) **Verteiler**

(30) Priorität: 02.04.2009 DE 202009002029 U
(71) Anmelder: Melitta Haushaltsprodukte GmbH & Co. KG, 32427 Minden (DE)
(72) Erfinder: Grote, Oliver, 32107 Bad Salzuflen (DE)
(74) Vertreter: Dantz, Jan Henning

(57) **Zusammenfassung**

Verteiler, insbesondere zur Ausgabe von Getränken, mit einer ersten Dichtscheibe (21) und einer zweiten Dichtscheibe (23), zwischen denen eine Steuerscheibe (22) drehbar angeordnet ist, wobei in den Dichtscheiben (21, 23) mehrere Öffnungen zur Ausbildung von Kanälen für flüssige oder gasförmige Medien vorgesehen sind und die Öffnungen in der ersten und zweiten Dichtscheibe (21, 23) durch Drehen der Steuerscheibe (22) wahlweise verschließbar oder zum Durchleiten eines Fluids zu öffnen sind.

## Beschreibung

Die vorliegende Erfindung betrifft einen Verteiler, insbesondere zur Ausgabe von Getränken.

Aus der US 5064097 ist eine Vorrichtung zur Reinigung und Ausgabe von Wasser bekannt, bei der Mittel zum Heizen und Kühlen des Wassers sowie ein Karbonisator zum Versetzen des Wassers mit CO₂ vorgesehen sind. Die einzelnen Einrichtungen sind über eine Vielzahl von Leitungen miteinander gekoppelt, an denen jeweils Ventile vorgesehen sind, die über eine Steuerung betätigt werden. Die Gestaltung der Steuerung durch die Vielzahl von Ventilen und Leitungen ist vergleichsweise aufwändig und die Montage ist kompliziert.

Es ist daher Aufgabe der vorliegenden Erfindung, einen Verteiler, insbesondere zur Ausgabe von Getränken, zu schaffen, der einfach ansteuerbar ist und die notwendige Funktionalität zum Verteilen von flüssigen oder gasförmigen Medien gewährleistet.

Diese Aufgabe wird mit einem Verteiler mit den Merkmalen des Anspruches 1 gelöst.

Erfindungsgemäß umfasst der Verteiler eine erste und eine zweite Dichtscheibe, zwischen denen eine Steuerscheibe drehbar angeordnet ist, wobei in den Dichtscheiben mehrere Öffnungen zur Ausbildung von Kanälen für flüssige oder gasförmige Medien vorgesehen sind und durch Drehen der Steuerscheibe wahlweise die Öffnungen verschließbar oder zum Durchleiten eines Fluids zu öffnen sind. Dadurch kann mit einer geringen Anzahl von Bauteilen eine hohe Funktionalität bereitgestellt werden, indem die Steuerscheibe gedreht wird, um dann mehrere Kanäle zu öffnen oder zu schließen. Durch geschickte Anordnung der Kanäle in den Dichtscheiben und der Steuerscheibe können dadurch vier oder mehr Ventile ersetzt werden. Zudem lässt sich die Steuerscheibe einfach durch Drehen betätigen.

In einer bevorzugten Ausgestaltung der Erfindung sind die Steuerscheibe und die Dichtscheibe auf der an der Steuerscheibe anliegenden Seite aus einem keramischen Werkstoff hergestellt. Dadurch kann durch passgenaues Anliegen der Dichtscheiben an der Steuerscheibe eine zuverlässige Abdichtung gewährleistet werden.

Für eine einfache Bewegung der Steuerscheibe kann diese am äußeren Umfang zumindest bereichsweise eine Verzahnung aufweisen, die mit einem angetriebenen Zahnrad in Eingriff steht. Dadurch kann relativ exakt eine vorgegebene Winkelposition erreicht werden.

In einer bevorzugten Ausführungsform wird der Verteiler in einer Vorrichtung zur Ausgabe von Getränken eingesetzt. Dann weist die erste Dichtscheibe vorzugsweise eine Zuleitung für CO₂ auf, die an einem unter Druck stehenden CO₂-Speicher angeschlossen ist. Ferner kann in der ersten Dichtscheibe eine Zuleitung für Wasser ausgebildet sein, die an eine Förderleitung für Wasser angeschlossen ist. Dadurch kann über eine geeignete Stellung der Steuerscheibe sowohl Wasser als auch CO₂ zu einer Ableitung in der zweiten Dichtscheibe geleitet werden, die dann CO₂ und Wasser zu einem Karbonisator leitet. Vorzugsweise ist in der zweiten Dichtscheibe eine zweite Ableitung für Wasser ausgebildet, die mit einer Getränkeausgabe verbunden ist, so dass unter Umgehung des Karbonisators Wasser sowohl in natürlicher Form als auch mit CO₂ versetzt an einer Getränkeausgabe ausgegeben werden kann.

Vorzugsweise weist die Steuerscheibe Kanäle auf, die in einer vorbestimmten Stellung der Steuerscheibe eine Reinigung von wasserführenden Kanälen mittels CO₂ ermöglichen. Dadurch kann der Verteiler hygienisch betrieben werden, indem nach Gebrauch oder in regelmäßigen Intervallen eine Reinigung der Kanäle erfolgt.

In einer weiteren Ausgestaltung sind die Dichtscheiben und die Steuerscheibe in einem gemeinsamen Gehäuse angeordnet. Das Gehäuse kann dabei mehrteilig ausgebildet sein und mehrere Stutzen aufweisen, die Anschlüsse für fluidführende Kanäle bilden. Jeder Stutzen ist dabei abgedichtet mit einer Öffnung in einer Dichtscheibe verbunden.

Die Erfindung wird nachfolgend anhand eines Ausführungsbeispiels mit Bezug auf die beigefügten Zeichnungen näher erläutert. Es zeigen:
- Figur 1: eine schematische Ansicht einer Vorrichtung zur Ausgabe von Getränken;
- Figur 2: eine Explosionsdarstellung eines erfindungsgemäßen Verteilers für die Vorrichtung der Figur 1, und
- Figuren 3A bis 3E: mehrere Ansichten des Verteilers der Figur 2.

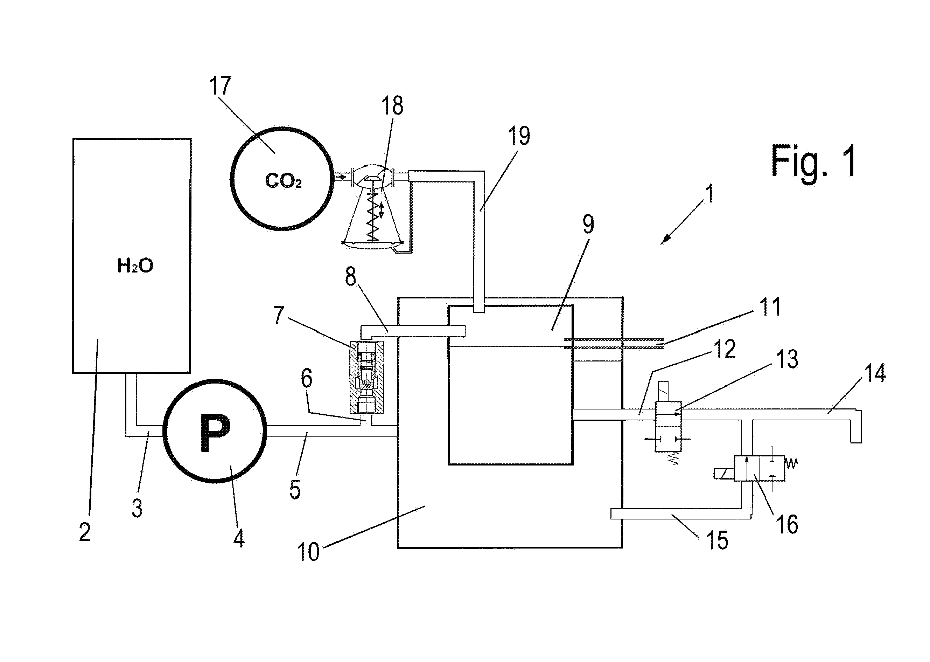

Eine in Figur 1 schematisch dargestellte Vorrichtung 1 zur Ausgabe von Getränken umfasst einen Wassertank 2, der für eine Befüllung abnehmbar ausgestaltet sein kann, insbesondere wenn die Vorrichtung im Haushaltsbereich eingesetzt wird. Der Wassertank 2 ist über eine Leitung 3 mit einer Pumpe 4 verbunden, die Wasser aus dem Wassertank 2 über eine Leitung 5 zu einem Behälter 10 fördert. An der Leitung 5 ist eine Abzweigung 6 ausgebildet, die über ein Rückschlagventil 7 und eine Leitung 8 mit einem Karbonisator 9 verbunden ist.

Der Karbonisator 9 dient zur Anreicherung des geförderten Wassers mit CO₂. Hierfür ist der Karbonisator 9 an einen unter Druck stehenden CO₂-Speicher 17 angeschlossen, der über einen Druckminderer 18 und eine Leitung 19 mit dem Karbonisator 9 verbunden ist. Ferner ist an dem Karbonisator 9 eine schematisch dargestellte Füllstandserkennung 11 vorgesehen, mittels der der Füllstand des Karbonisators 9 mit flüssigem Medium erfassbar ist.

Der Karbonisator 9 ist über eine Leitung 12 mit einem schaltbaren Ventil 13 verbunden, das an eine Getränkeausgabe 14 angeschlossen ist. Parallel hierzu ist der Behälter 10 mit dem nicht karbonisierten Wasser über eine Leitung 15 mit einem schaltbaren Ventil 16 verbunden, das ebenfalls an die Getränkeausgabe 14 angeschlossen ist. Über Schaltung der Ventile 13 und 16 kann der Benutzer entscheiden, ob er karbonisiertes Wasser aus dem Karbonisator 9 oder stilles Wasser aus dem Behälter 10 erhalten möchte.

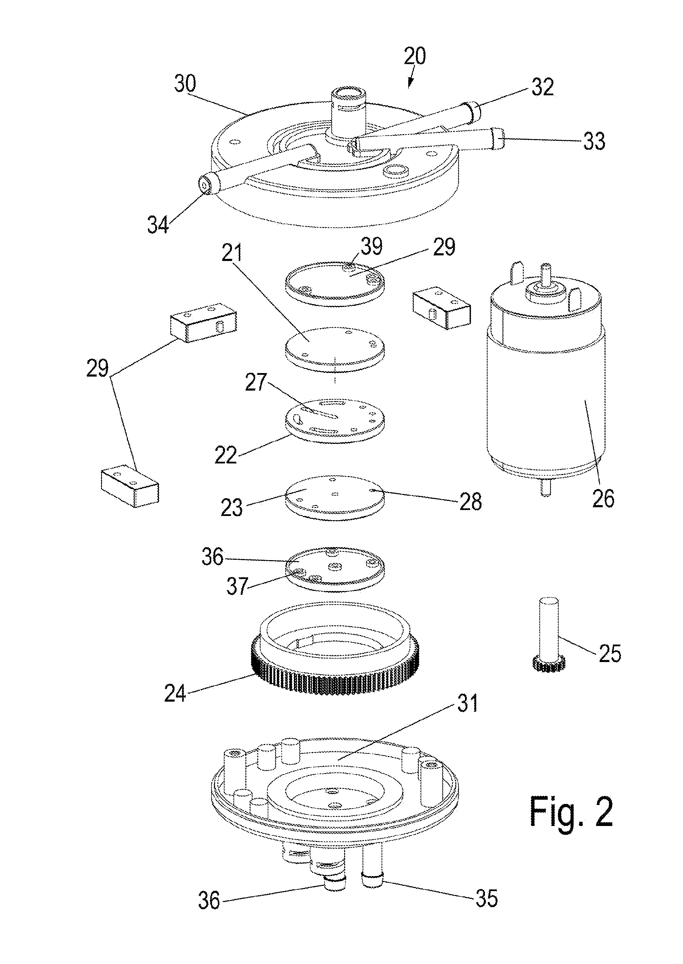

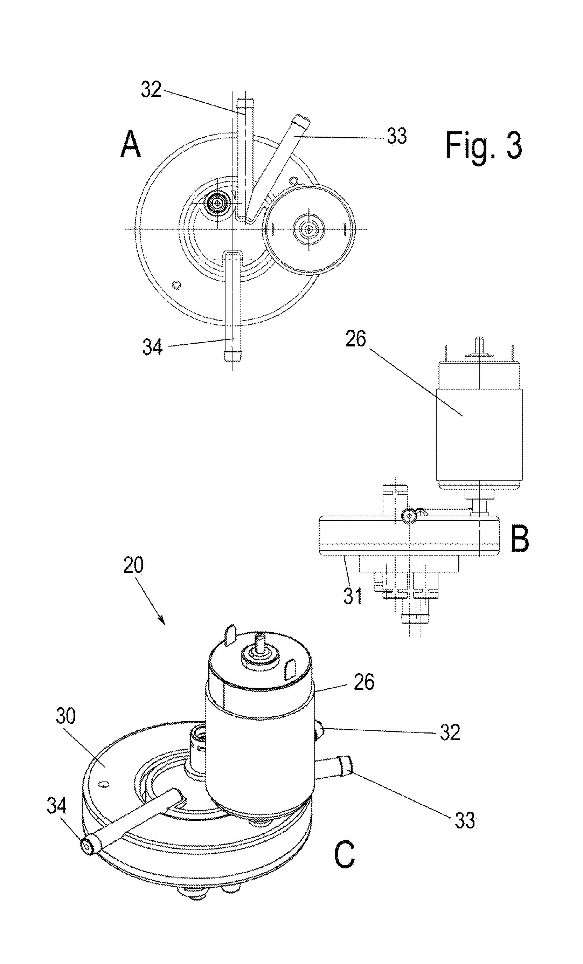

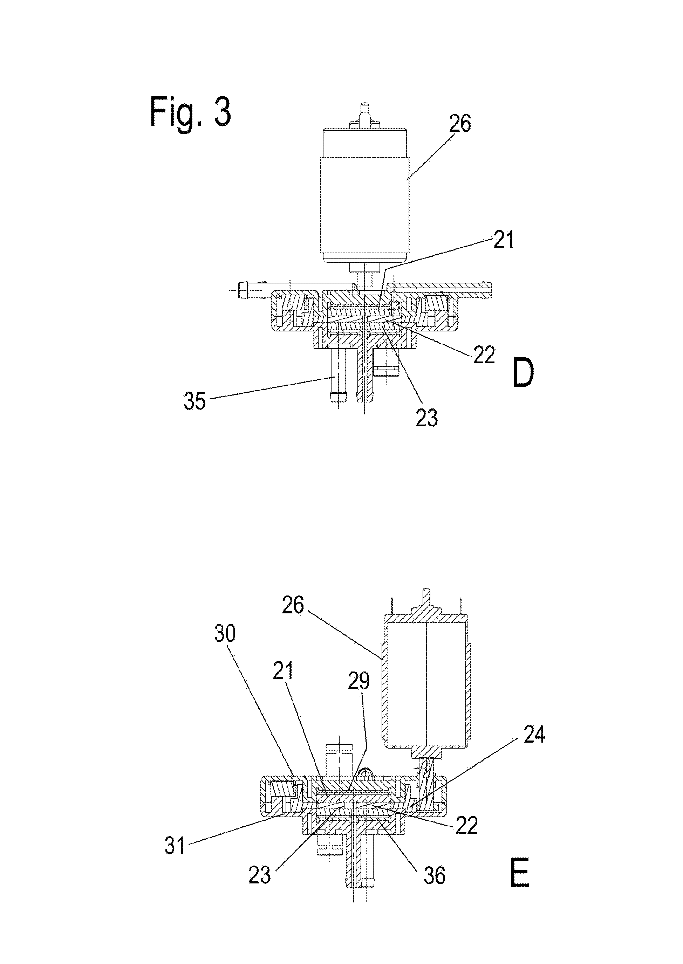

In den Figuren 2 und 3A bis 3E ist ein erfindungsgemäßer Verteiler 20 gezeigt, der als zentrales Schaltelement mit der Leitung 19 zu dem CO₂-Speicher, der Leitung 5 und der Leitung 8 auf der Zufuhrseite verbunden ist. Hierfür sind an einem Gehäuseoberteil 30 mehrere Stutzen 32, 33 und 34 ausgebildet, die an die Leitungen angeschlossen sind. An einem Gehäuseunterteil 31 sind weitere Stutzen 35 und 36 ausgebildet, die als Ableitungen dienen.

In dem Gehäuse ist eine erste Dichtscheibe 21 und eine zweite Dichtscheibe 23 vorgesehen, zwischen denen eine Steuerscheibe 22 drehbar gelagert ist. Die Dichtscheiben 21 und 23 sowie die Steuerscheibe 22 können vollständig oder teilweise aus einem keramischen Werkstoff hergestellt sein, um eine zuverlässige Abdichtung zu erreichen. In den Dichtscheiben 21 und 23 sind mehrere Öffnungen zur Ausbildung von Kanälen vorgesehen, die in Verbindung mit den Anschlüssen 32, 33 und 34 an dem Gehäuseoberteil 30 bzw. mit den Stutzen 35 und 36 an dem Gehäuseunterteil 31 stehen. Die Dichtscheiben 21 und 23 sind dabei abgedichtet und stationär an dem Gehäuseoberteil 30 bzw. dem Gehäuseunterteil 31 gehalten. Zwischen dem Gehäuseoberteil 30 und der Dichtscheibe 21 ist eine scheibenförmige Halterung 29 vorgesehen, während zwischen dem Gehäuseunterteil 31 und der Dichtscheibe 23 eine scheibenförmige Halterung 36 angeordnet ist. Die Halterung 29 weist dabei Öffnungen 39 in Form von Strömungskanälen auf, die mit den Öffnungen in der Dichtscheibe 21 fluchten und Verbindung mit einem der Stutzen 32, 33 oder 34 stehen. Auf ähnliche Weise sind an der Halterung 36 Öffnungen 37 als Strömungskanäle ausgebildet, die mit den Stutzen 35 und 36 in Verbindung stehen. Die Zahl der Stutzen 32 bis 36 und der entsprechenden Öffnungen hängt vom jeweiligen Anwendungsfall ab und kann individuell gestaltet werden.

Die Steuerscheibe 22 ist hingegen drehbar gelagert, wobei die Steuerscheibe 22 an ihrem äußeren Umfang drehfest mit einem Zahnring 24 gekoppelt ist, der über ein Zahnrad 25 in Eingriff mit einem Antrieb 26 steht. Durch Drehen der Steuerscheibe 22 kann der Verteiler unterschiedliche Funktionen ausüben, insbesondere werden Öffnungen 27 in der Steuerscheibe 22 mit zugehörigen Öffnungen 28 in der Dichtscheibe 23 in Eingriff gebracht oder verschlossen. Für die Drehung der Steuerscheibe 22 ist eine Steuerung vorgesehen, die mit mehreren Endschaltern 29 gekoppelt ist. Die Öffnungen 27 in der Steuerscheibe können dabei als Durchgangsöffnungen, Langlöcher oder als nutförmige Kanäle ausgebildet sein, so dass durch Drehen der Steuerscheibe 22 unterschiedliche Funktionen realisiert werden können.

Die Funktionalität der Dichtscheiben 21 und 23 sowie der Steuerscheibe 22 wird nachfolgend mit Bezug auf verschiedene Funktionsstellungen erläutert:
Funktionsstellung "Kaltwasserbezug"
   - Luftzufuhr zur Pumpe geschlossen
   - Wasser zur Pumpe offen
   - Durchgang zum Auslauf offen
   - CO₂-Anschluss geschlossen
   - CO₂-Bezug geschlossen
   - Reinigung Kaltwasser geschlossen
Funktionsstellung "CO₂-Wasserbezug"
   - Luftzufuhr zur Pumpe geschlossen
   - Wasser zur Pumpe offen
   - Durchgang zum Auslauf offen
   - CO₂-Anschluss offen (verzögert, zuerst wird der Karbonisierer 9 mit CO₂befüllt)
   - Reinigung Kaltwasser geschlossen
   - Kaltwasserbezug geschlossen
Funktionsstellung "CO₂-Bereich-Ausblasen"
   - Luftzufuhr zur Pumpe offen
   - Wasser zur Pumpe geschlossen
   - Durchgang zum Auslauf offen
   - CO₂-Anschluss geschlossen
   - CO₂-Bezug offen
   - Reinigung Kaltwasser geschlossen
   - Kaltwasserbezug geschlossen
Funktionsstellung "Kaltwasserbereich-Ausblasen"
   - Luftzufuhr zur Pumpe 4 offen
   - Wasser zur Pumpe 4 geschlossen
   - Durchgang zum Auslauf offen
   - CO₂-Anschluss geschlossen
   - CO₂-Bezug geschlossen
   - Reinigung Kaltwasser geschlossen
   - Kaltwasserbezug offen
Funktionsstellung "Kaltwasserbereich-Reinigen"
   - Luftzufuhr zur Pumpe 4 geschlossen
   - Wasser zur Pumpe 4 offen
   - Durchgang zum Auslauf offen
   - CO₂-Anschluss geschlossen
   - CO₂-Bezug geschlossen
   - Reinigung Kaltwasser offen
   - Kaltwasserbezug offen
Funktionsstellung "CO₂-Wasserbereich-Reinigen"
   - Luftzufuhr zur Pumpe geschlossen
   - Wasser zur Pumpe offen
   - Durchgang zum Auslauf offen
   - CO₂-Anschluss offen
   - CO₂-Bezug offen
   - Reinigung Kaltwasser geschlossen
   - Kaltwasserbezug geschlossen
Funktionsstellung "Kaltwasserbezug-Spülen"
   - Luftzufuhr zur Pumpe geschlossen
   - Wasser zur Pumpe offen
   - Durchgang zum Auslauf offen
   - CO₂-Anschluss geschlossen
   - CO₂-Bezug geschlossen
   - Reinigung Kaltwasser geschlossen
Funktionsstellung "CO₂-Wasserbezug-Spülen"
   - Luftzufuhr zur Pumpe geschlossen
   - Wasser zur Pumpe offen
   - Durchgang zum Auslauf offen
   - CO₂-Anschluss offen (verzögert, zunächst wird der Karbonisierer 9 mit CO₂ befüllt)
   - Reinigung Kaltwasser geschlossen
   - Kaltwasserbezug geschlossen

## Patentansprüche

1. Verteiler, insbesondere zur Ausgabe von Getränken, mit einer ersten Dichtscheibe (21) und einer zweiten Dichtscheibe (23), zwischen denen eine Steuerscheibe (22) drehbar angeordnet ist, wobei in den Dichtscheiben (21, 23) mehrere Öffnungen zur Ausbildung von Kanälen für flüssige oder gasförmige Medien vorgesehen sind und die Öffnungen in der ersten und zweiten Dichtscheibe (21, 23) durch Drehen der Steuerscheibe (22) wahlweise verschließbar oder zum Durchleiten eines Fluids zu öffnen sind.

2. Verteiler nach Anspruch 1, **dadurch gekennzeichnet, dass** die Steuerscheibe (22) und die Dichtscheiben (21, 23) auf der an der Steuerscheibe (22) anliegenden Seite aus einem keramischen Werkstoff hergestellt sind.

3. Verteiler nach Anspruch 1 oder 2, **dadurch gekennzeichnet, dass** die Steuerscheibe (22) am äußeren Umfang zumindest bereichsweise eine Verzahnung aufweist, die mit einem angetriebenen Zahnrad (25) in Eingriff steht.

4. Verteiler nach einem der Ansprüche 1 bis 3, **dadurch gekennzeichnet, dass** in der ersten Dichtscheibe (21) eine Zuleitung für CO₂ ausgebildet ist, die an einem unter Druck stehenden CO₂-Speicher (17) angeschlossen ist.

5. Verteiler nach einem der Ansprüche 1 bis 4, **dadurch gekennzeichnet, dass** in der ersten Dichtscheibe (21) eine Zuleitung für Wasser ausgebildet ist, die an eine Förderleitung (5) für Wasser angeschlossen ist.

6. Verteiler nach einem der Ansprüche 1 bis 5, **dadurch gekennzeichnet, dass** in der zweiten Dichtscheibe (23) eine Ableitung für CO₂ und eine Ableitung für Wasser ausgebildet sind, die beide mit einem Karbonisator (9) verbunden sind.

7. Verteiler nach einem der Ansprüche 1 bis 6, **dadurch gekennzeichnet, dass** in der zweiten Dichtscheibe (23) eine zweite Ableitung für Wasser ausgebildet ist, die mit einer Getränkeausgabe (14) verbunden ist.

8. Verteiler nach einem der Ansprüche 1 bis 7, **dadurch gekennzeichnet, dass** die Dichtscheiben (21, 23) und die Steuerscheibe (22) in einem Gehäuse (30, 31) angeordnet sind.

9. Verteiler nach Anspruch 8, **dadurch gekennzeichnet, dass** an dem Gehäuse (30, 31) mehrere Stutzen (32, 33, 34, 35, 36) ausgebildet sind, die Anschlüsse für fluidführende Kanäle bilden.

10. Verteiler nach einem der Ansprüche 1 bis 9, **dadurch gekennzeichnet, dass** die Steuerscheibe (22) Kanäle aufweist, die in einer vorbestimmten Stellung der Steuerscheibe (22) eine Reinigung von wasserführenden Kanälen mittels CO₂ ermöglichen.
